# EUROPÄISCHE PATENTSCHRIFT

(11) **EP 3 017 509 B1**
(45) Veröffentlichungstag und Bekanntmachung des Hinweises auf die Patenterteilung: **31.10.2018**
(21) Anmeldenummer: 14730750.8
(22) Anmeldetag: 14.06.2014
(51) Int. Cl.: H01R 4/18, B23K 26/20, H01R 43/02, H01R 43/048

(54) **VERFAHREN ZUM VERBINDEN EINES ELEKTRISCHEN LEITERS MIT EINEM ELEKTRISCHEN KONTAKTTEIL**
METHOD FOR CONNECTING AN ELECTRICAL CONDUCTOR TO AN ELECTRICAL CONTACT PART
PROCÉDÉ DE RACCORDEMENT D'UN CONDUCTEUR ÉLECTRIQUE À UN ÉLÉMENT DE CONTACT ÉLECTRIQUE

(30) Priorität: 01.07.2013 DE 102013010981
(43) Veröffentlichungstag der Anmeldung: 11.05.2016
(73) Patentinhaber: Audi AG, 85045 Ingolstadt (DE); Schäfer Werkzeug- und Sondermaschinenbau GmbH, 76669 Bad Schönborn-Langenbrücken (DE)
(72) Erfinder: BAUER, Hans, 91126 Rednitzhembach (DE); SCHÄFER, Markus, 76669 Bad Schönborn (DE); WOLFF, Hansjörg, 74211 Leingarten (DE)
(74) Vertreter: Hoffmann Eitle
(86) Internationale Anmeldenummer: PCT/EP2014/001616
(87) Internationale Veröffentlichungsnummer: WO 2015/000550

(56) Entgegenhaltungen:
- DE-A1- 19 651 513
- DE-A1-102010 035 424
- GB-A- 2 341 497
- JP-A- H0 495 372
- JP-A- 2000 231 944
- JP-U- H0 631 072

## Beschreibung

Die Erfindung betrifft ein Verfahren zum Verbinden eines elektrischen Leiters mit einem elektrischen Kontaktteil.

Für elektronische und elektrische Komponenten von beispielsweise einem Bordnetz eines Kraftwagens erfolgt die Verbindung von Kontaktteilen und elektrischen Leitern (Leitungen) in der Regel über eine mechanische, kraftschlüssige Verbindung, die sogenannte Crimpverbindung. Beim Crimpverfahren werden wenigstens zwei Komponenten durch plastische Verformung wenigstens einer Komponente kraftschlüssig miteinander verbunden. Üblicherweise weist ein Kontaktteil Flanken (Crimpflanken, Schenkel) auf, welche unter Krafteinwirkung mit den Litzen eines Kabels durch Quetschen verpresst werden. Hierbei wird in der Regel keine stoffschlüssige Verbindung erzielt. Nach dem Stand der Technik ist es üblich, über einen Verpressungsgrad von ca. 20% eine wabenförmige Verpressung der Litzen im Kontaktteil zu erzielen. Zudem sollte eine Abstützung der Flanken gegen ein eventuelles Zurückfedern erreicht werden.

Die Qualitätssicherung solcher Crimpverbindungen erfolgt gewöhnlich durch die sogenannte Crimpkraftüberwachung, bei der man die für das Crimpen bzw. Verbiegen aufzuwendende Kraft in Abhängigkeit von dem Verbiege-Weg misst. Die über den Weg integrierte Kraft ergibt die verrichtete Arbeit, wobei bei der Crimpkraftüberwachung der Arbeitsunterschied zwischen einem gecrimpten Kontaktteil ohne Leitung und einem gecrimpten Kontaktteil mit Leitung als Maß für die Qualität der Crimpverbindung herangezogen wird. Durch einen Arbeitsunterschied von ca. 30% können fehlende Litzen eines Kabels, eine schlechte Verpressung von Kontaktteil und Leitung und veränderte Crimpparameter (z. B. Crimphöhe) diagnostiziert werden.

Das aus dem Stand der Technik bekannte Crimpverfahren hat zwei wesentliche Nachteile: Bei sehr geringen Leitungsquerschnitten (kleiner als 0,35 qmm) oder großer Blechdicke des Kontaktteils im deformierten Bereich ist der gemessene Arbeitsunterschied so gering, dass eine gute Überwachung des Crimpverfahrens nicht mehr möglich ist. Beispielsweise lassen sich dann fehlende Litzen eines Kabels nicht mehr identifizieren. Fehlen jedoch einzelne Litzen des Kabels im vercrimpten Bereich, so sinkt der Verpressungsgrad im Crimp und der elektrische Übergangswiderstand zwischen Leiter und Kontaktteil kann bis ins Unendliche ansteigen. Eine elektrische Funktionalität der Verbindung ist damit nicht mehr gegeben.

Ein typischer Werkstoff für das zu deformierende Kontaktteil ist Metall. Da jedes Metall elastische Eigenschaften aufweist, kann bei einer unzureichenden Abstützung der verformten Crimpflanken ein unerwünschtes Zurückfedern ("Atmen") dieser Flanken auftreten. Hierdurch kann sich der Kontakt zwischen dem verformten Kontaktteil und dem Leiter verschlechtern, der elektrische Widerstand zwischen beiden Komponenten zunehmen und die Qualität der Crimpverbindung verschlechtern.

Vor diesem Hintergrund sind bereits eine Reihe von Verfahren und Vorrichtungen zur Verbesserung des Crimpverfahrens vorgeschlagen bzw. entwickelt worden.

So ist aus der DE 103 58 153 A1 ein Verbindungsverfahren bekannt, bei dem ein Kabel mit einem Kontaktelement zunächst vercrimpt und anschließend mit diesem in drei einzelnen Schritten laserverschweißt wird. Das Vercrimpen und das Laserschweißen werden in zwei separaten Vorrichtungen und damit auch in getrennten Arbeitsschritten vorgenommen.

Die DE 10 2004 053 126 A1 offenbart eine Vorrichtung, in der ein elektrischer Leiter mit einem Kontaktelement im gleichen Arbeitsvorgang sowohl vercrimpt als auch verschweißt wird. Die Crimplaschen des Kontaktelements werden hierbei mit einem speziellen Crimpwerkzeug verpresst. Der Quetschkontakt wird zwischen der Aderhülle des elektrischen Leiters und den Crimplaschen des Kontaktelements hergestellt, wohingegen das Verschweißen an örtlich anderer Stelle zwischen einem Leiterende und dem Kontaktelement erfolgt. Beim Schweißen fließt ein elektrischer Strom über Schweißelektroden durch die zu verbindenden Elemente des Leiters und des Kontaktelements.

Aus der DE 198 40 214 C2 ist ein Verfahren zum Pressschweißen bekannt, mittels dem Leitungen zwischen den Laschen eines Leitungshalteteils fixiert werden. Hierzu werden die Leitungen zunächst in das Leitungshalteteil eingebracht und dessen eine Lasche überlappend unter die andere Lasche unter Zuhilfenahme eines Amboss und eines Crimpstempels gepresst. Anschließend erfolgt das Verschweißen der Laschen.

Die DE 100 07 258 A1 beschreibt einen mobilen Kabelverbinder, bei dem ein Drahtbündel in eine abgeschrägte, zylindrische Metallhülse eingeführt wird. An der abgeschrägten Einstecköffnung wird dann das Drahtbündel mit einer Hülsenseite über zwei Elektroden ultraschallverschweißt.

Die DE 103 52 482 A1 beschreibt eine Vorrichtung, mit der sich die Litzen verschiedener Kabel verschweißen lassen. Zudem ermöglicht die Vorrichtung, die elektrische isolierten Bereiche der Kabel zu vercrimpen.

Aus der DE 30 17 364 A1 ist ein Verfahren bekannt, bei dem die Litzen eines Kabels zunächst mit einem Flachstecker vercrimpt werden, indem ein Prägestempel die Metallschenkel des Flachsteckers zusammendrückt. Der Prägestempel dient auch zum Ultraschallverschweißen von Litzen und Flachstecker miteinander.

Auch aus der DE 10 2007 032 584 B4 ist eine Vorrichtung bekannt, mit der Crimp- und Schweißverbindungen hergestellt werden können. Hierbei wird zunächst der Crimp eines Kontaktelements um die Isolierung eines Kabels geschlossen und in einem zweiten Schritt das abisolierte Kabelende mit dem Kontakt verschweißt.

Die JP 2000231944 A hat ein elektrisches Crimp-Kontaktelement für einen elektrischen Leiter zum Gegenstand, bei dem die Crimpflanken Bestrahlungsöffnungen aufweisen. Nach dem Crimpvorgang können durch die Bestrahlungsöffnungen hindurch das Kontaktelement und der elektrische Leiter mittels eines Laserstrahls miteinander verschweißt werden.

Und aus der DE 10 2010 035 424 A1 ist Verfahren zum Verbinden eines elektrischen Leiters mit einem verformbare Schenkel aufweisenden elektrischen Kontaktteil bekannt, wobei die Schenkel mittels eines Biegestempels so verformt werden, dass sie den Leiter mit dem Kontaktteil kraftschlüssig verpressen, wobei das Kontaktteil derart gestaltet wird, dass zumindest die Schenkel stoffschlüssig miteinander verbunden werden. Aus dieser Offenlegungsschrift ist auch eine Vorrichtung mit einem Biegestempel zum Verbinden eines elektrischen Leiters mit einem elektrischen Kontaktteil bekannt, wobei das Kontaktteil verformbare Schenkel aufweist und der Biegestempel dazu ausgebildet ist, die Schenkel so zu verformen, dass sie den Leiter mit dem Kontaktteil kraftschlüssig verpressen, und wobei die Vorrichtung weiterhin ein Laserschweißgerät umfasst, wobei das Laserschweißgerät dazu ausgebildet ist, auf das Kontaktteil dergestalt einzuwirken, dass zumindest die Schenkel stoffschlüssig miteinander verbunden werden.

Als weitere Dokumente sind die GB 2 341 497 A, DE 196 51 513 A1, JP H04-95372 A, JP H06-31072 U sowie JP 2000-231944 A bekannt.

Es ist Aufgabe der vorliegenden Erfindung eine sichere Verbindung zwischen einem elektrischen Leiter und einem elektrischen Kontaktteil herzustellen und gleichzeitig Nachteile des Stands der Technik zu überwinden.

Diese Aufgaben werden durch das Verfahren gemäß Anspruch 1 gelöst.

Erfindungsgemäß wird ein Verfahren zum Verbinden eines elektrischen Leiters mit einem elektrischen Kontaktteil vorgeschlagen, wobei das Kontaktteil einen Bodenteil und damit verbundene, verformbare Flanken aufweist, und wobei die Flanken mittels einer Vorrichtung, die einen Biegestempel sowie einen Auflagebereich für wenigstens einen Abschnitt des Bodenteils des elektrischen Kontaktteils aufweist, mittels des Biegestempels so verformt werden, dass sie den elektrischen Leiter mit dem Kontaktteil kraftschlüssig verpressen.

Das erfindungsgemäße Verfahren ist dadurch gekennzeichnet, dass wenigstens innerhalb eines unteren Totpunktzeitraums des Biegestempels auf den sich wenigstens teilweise zwischen dem Auflagebereich und dem Biegestempel angeordneten Kontaktteil durch den Auflagebereich hindurch dergestalt eingewirkt wird, dass wenigstens eine Komponente des elektrischen Leiters stoffschlüssig mit dem Bodenteil und/oder wenigstens einer Flanke verbunden wird.

Mit dem erfindungsgemäßen Verfahren können mehrere Vorteile erzielt werden. Da die Einwirkung auf das Kontaktteil von der Seite des Auflagebereichs her erfolgt, ist keinerlei Modifikation des für das Verfahren üblicherweise verwendeten Biegestempels erforderlich.

Auch können für das erfindungsgemäße Verfahren weiterhin Standardkontaktteile (Standardkontakte) ohne jede Modifikation verwendet werden. Des Weiteren ist die Positionierung des Kontaktteils unproblematisch, da keine engen Toleranzen eingehalten werden müssen. Und da die Einwirkung während oder innerhalb des unteren Totpunktzeitraums des Biegestempels erfolgt, kann die Einwirkung zudem während des eigentlichen Crimpvorgangs taktzeitneutral oder nahezu taktzeitneutral erfolgen.

Erfindungsgemäß erfolgt die Einwirkung, welche die stoffschlüssige Verbindung bewirkt, über wenigstens eine Öffnung in dem Auflagebereich. Dabei wird die stoffschlüssige Verbindung mittels wenigstens eines durch die wenigstens eine Öffnung in dem Auflagebereich hindurchtretenden Laserstrahls bewirkt.

Da, wie oben bereits erwähnt, die Einwirkung auf das Kontaktteil von der Seite des Auflagebereichs her erfolgt, und dem Auflagebereich keine oder nur eine untergeordnete Rolle bei der Verformung der Flanken des Kontaktteils durch den Biegestempel zukommt, können eine oder mehrere Öffnungen mit einem vergleichsweise großen Durchmesser in dem Auflagebereich vorgesehen sein, d.h. eine oder mehrere Öffnungen, die einen deutlich größeren Durchmesser aufweisen, als der/die verwendeten Laserstrahl/Laserstrahlen. Hierdurch kann ein Anschweißen des Kontaktteils an dem Auflagebereich bei dem erfindungsgemäßen Verfahren vermieden und das Qualitätsfenster vergrößert werden.

Gemäß einer vorteilhaften Weiterbildung des Verfahrens wird durch wenigstens eine Öffnung in dem Bodenteil des Kontaktteils auf den elektrischen Leiter dergestalt eingewirkt, dass wenigstens eine Komponente des elektrischen Leiters stoffschlüssig mit dem Bodenteil und/oder wenigstens einer Flanke verbunden wird.

Bei einer Einwirkung durch wenigstens eine Öffnung in dem Bodenteil des Kontaktteils hindurch kann beispielsweise bei Kontaktteilen mit vergleichsweise großer Materialstärke (Blechdicke) auf energiesparende Weise eine stoffschlüssige Verbindung zwischen wenigstens einer Komponente des Leiters und dem Bodenteil und/oder wenigstens einer Flanke des Kontaktteils hergestellt werden, ohne dass eine größere Menge des Materials des Bodenteils geschmolzen werden muss.

Gemäß einer vorteilhaften Weiterbildung dieser Ausführungsform des Verfahrens weist der Bereich, auf welchen der Laserstrahl einwirkt, eine größere Fläche als die Fläche der Öffnung in dem Bodenteil auf, wobei die Fläche senkrecht zur Strahlrichtung des Laserstrahls beim Auftreffen auf den Bereich zu messen ist.

Hierdurch kann sichergestellt werden, dass der Laserstrahl auch auf Material des Bodenteils im Randbereich der Öffnung in dem Bodenteil gestrahlt wird, wodurch auf energiesparende Weise eine stoffschlüssige Verbindung zwischen wenigstens einer Komponente des Leiters und dem Rand der Öffnung des Bodenteils bewirkt werden kann.

Weitere Vorteile ergeben sich, wenn für ein Kontaktteil mit einer Längs- und einer Quererstreckung das stoffschlüssige Verbinden zumindest in einem bezüglich der Längserstreckung mittigen Teilbereich erfolgt.

Weitere Merkmale der Erfindung ergeben sich aus den Ansprüchen, den Figuren und der Figurenbeschreibung. Die vorstehend in der Beschreibung genannten Merkmale und Merkmalskombinationen wie auch die in der Figurenbeschreibung genannten Merkmale und Merkmalskombinationen und/oder die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die vorliegende Erfindung wird nachfolgend anhand der beigefügten Zeichnungen näher erläutert.

Dabei zeigen:
- Fig. 1: schematische Schnittdarstellungen einer erfindungsgemäßen Vorrichtung zum Verbinden eines elektrischen Leiters mit einem elektrischen Kontaktteil zu vier verschiedenen Zeitpunkten a) bis d) während des Ablaufs des erfindungsgemäßen Verbindungsverfahrens;
- Fig. 2:: eine schematische Schnittdarstellung durch ein elektrisches Kontaktteil mit verformten Flanken und kraftschlüssig verpressten Litzen eines Kabels;
- Fig. 3:: eine schematische Draufsicht auf einen Ausschnitt eines Beispiels eines elektrischen Kontaktteils;
- Fig. 4:: eine schematische Seitenansicht eines elektrischen Kontaktteils mit verformten Flanken und kraftschlüssig verpressten Litzen eines Kabels angeordnet auf dem in Schnittdarstellung dargestellten Auflagebereich der Vorrichtung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

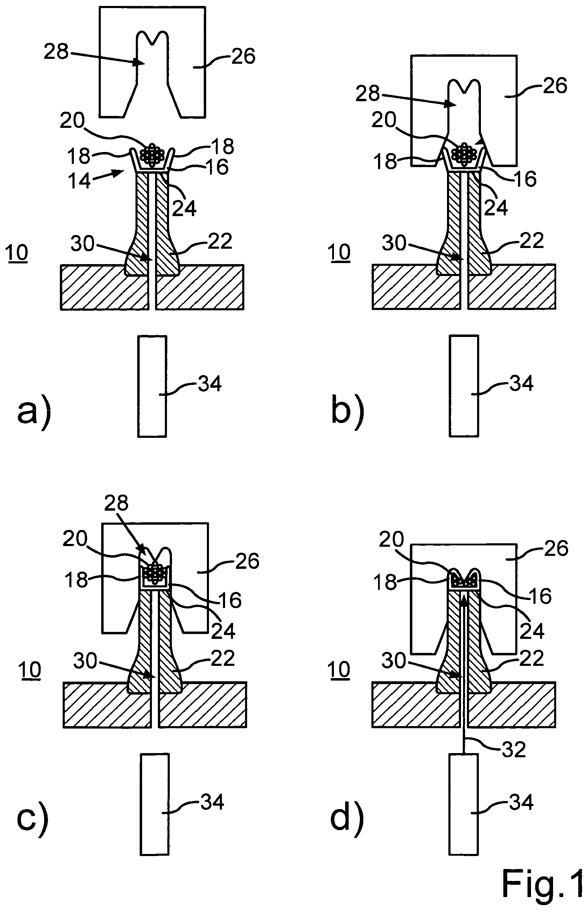

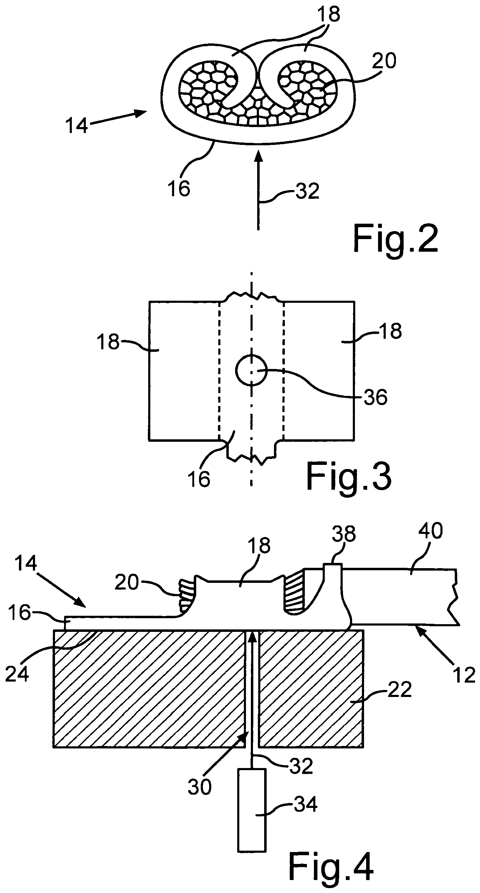

Wie in Fig. 1 schematisch dargestellt ist, bedient sich das erfindungsgemäße Verfahren einer Vorrichtung 10 zum Verbinden eines elektrischen Leiters 12 mit einem elektrischen Kontaktteil 14. Das mit der Vorrichtung 10 verwendbare elektrische Kontaktteil 14 weist einen Bodenteil 16 und damit verbundene, verformbare Flanken 18 auf. Das Kontaktteil 14 ist im Ausführungsbeispiel aus Metall gefertigt (z.B. Kupfer) und weist paarweise einander gegenüberliegende Flanken 18 auf. Die Komponente(n) 20 des Leiters 12 ist/sind zwischen den Flanken 18 lose eingebracht. Bei dem elektrischen Leiter 12 handelt es sich im Ausführungsbeispiel um ein Kabel mit einer Vielzahl von Einzelleitern bzw. Litzen als Komponenten 20. Wie in Fig. 4 gezeigt ist, kann der elektrische Leiter 12 eine elektrisch isolierende Umhüllung 40 aufweisen, die in einem Endbereich des elektrischen Leiters 12 für den Crimpvorgang entfernt ist. Im Ausführungsbeispiel sind die Litzen 20 aus einem elektrisch leitenden Metall gefertigt. Litzen 20 sind oftmals nicht isolierte Drähte, können jedoch auch eine elektrisch isolierende Umhüllung aufweisen. Das vorliegende Verfahren ist jedoch nicht auf elektrische Leiter 12 mit einer Vielzahl an Einzelleitern beschränkt, vielmehr kann der elektrische Leiter 12 als Komponente(n) 20 auch nur einen oder zwei Einzelleiter aufweisen. Insbesondere zum Zeitpunkt (a) von Fig. 1 ist noch keine dauerhafte Verbindung zwischen dem Kontaktteil 14 und den Litzen 20 des Leiters 12 hergestellt.

Die Vorrichtung 10 umfasst insbesondere einen Stößel (Amboss) 22, auf dem das Kontaktteil 14 mit wenigstens einem Abschnitt seines Bodenteils 16 auf einem Auflagebereich 24 des Stößels 22 aufliegt. Die Vorrichtung 10 umfasst weiter einen Biegestempel 26, welcher gegenstückig zum Stößel 22 ausgebildet ist. Dies ermöglicht, dass zumindest ein Teilbereich des Stößels 22 in eine Ausnehmung 28 des Biegestempels 26 eingeführt werden kann. Stößel 22 und Biegestempel 26 wirken dabei als Stück und Gegenstück passgenau zusammen. Der Biegestempel 26 wird auch als Crimper bezeichnet und ist in der Regel aus Metall gefertigt. Es handelt sich bei ihm somit üblicherweise um ein Verschleißteil, welches nach häufigem Wiederholen des erfindungsgemäßen Verbindungsverfahrens ausgetauscht werden muss. Entsprechendes gilt für den Amboss (Stößel) 22.

Der Biegestempel 26 ist so ausgebildet, dass sich mit ihm verformbare Flanken 18 des elektrischen Kontaktteils 14 so verformen lassen, dass sie alle Komponenten 20 eines elektrischen Leiters 12 mit dem Kontaktteil 14 kraftschlüssig verpressen. Der Biegestempel 26 ist insbesondere so ausgebildet, dass er die Flanken 18 des Kontaktteils 14 in vorgegebener und kontrollierter Art und Weise verformt.

Das Verfahren ist insbesondere auf Kontaktteile 14 anwendbar, welche aus Metall gebildet sind und welche seitliche Flankenbereiche 18 in Form von Metalllappen bzw. -schenkeln aufweisen, die umgebogen werden können. Die Flanken 18 eines Kontaktteils 14 können paarweise einander gegenüber angeordnet sein. Befindet sich zwischen den Flanken 18 ein elektrischer Leiter 12, z.B. in Form von Litzen 20 eines Kabels, kann dieser durch Verformen der Flanken 18 zwischen ihnen eingepresst werden.

Der Biegestempel 26 ist insbesondere so ausgebildet, dass dieses Quetschen oder Pressen besonders effektiv durchgeführt werden kann. Er wird insbesondere eine Ausnehmung 28 für das Kontaktteil 14 und den Leiter 12 aufweisen, wobei eine Krafteinwirkung zwischen Kontaktteil 14 und Biegestempel 26 dazu führt, dass das Kontaktteil 14 durch den mechanischen Widerstand eines die Ausnehmung 28 begrenzenden Wandbereichs des Biegestempels 26 verformt wird. Wenigstens eine mit dem Kontaktteil 14 bzw. dessen Flanken 18 in mechanischem Kontakt stehende Seite bzw. Fläche des Biegestempels 26 ist vorzugsweise so ausgebildet, dass sich durch die verformende Krafteinwirkung eine spezifische Endform der deformierten Flanken 18 ergibt. Beispielsweise kann eine Wandung des Biegestempels 26 hierfür passend geformt sein, z. B. teilkreisförmig geformt sein.

Um das Kontaktteil 14 mit dem Leiter 12 zu verbinden, bewegen sich Stößel 22 und Biegestempel 26 so aufeinander zu, dass der Stößel 22 passgenau in die Ausnehmung 28 vordringt. Der Stößel 22 stützt das auf ihm aufliegende Kontaktteil 14 mit dem Leiter 12. Der Biegestempel 26 wird dann senkrecht auf den Stößel 22 zubewegt (siehe Zeitpunkt (b) in Fig.1).

Zu einem Zeitpunkt (c) gemäß Fig. 1 ist der Stößel 22 soweit in die Ausnehmung 28 vorgedrungen, dass die Flanken 18 des Kontaktteils 14 die untere Seite des Biegestempels 26 berühren. Bei einem weiteren Aufeinanderzubewegen von Stößel 22 und Biegestempel 26 wird dann durch die Flanken 18 eine Kraft entgegengesetzt.

Wird nun auf den Stößel 22 und/oder den Biegestempel 26 weiter Kraft ausgeübt, kommt es zu einer Verformung der Flanken 18. Je nach Dauer der Krafteinwirkung sowie des Umfangs der Verformung ist die sich ergebende Deformation der Flanken 18 plastischer Natur. Durch eine geeignete Ausgestaltung des oberen Endes der Ausnehmung 28 des Biegestempels 26 wird erreicht, dass sich die Flanken 18 in kontrollierter und vordefinierter Art und Weise verformen. Im Ausführungsbeispiel weist das obere Ende der Ausnehmung 28 zwei teilkreisförmige Rundungen auf, denen die Flanken 18 während des Verformens folgen, so dass sie sich quasi einrollen.

In Fig. 2 ist ein Kontaktteil 14 mit verformten Flanken 18 dargestellt, wie es im Zeitpunkt d gemäß Fig. 1 des Verfahrens ausgebildet ist. Die auf gegenüber liegenden Seiten des Kontaktteils 14 ausgebildeten Flanken 18 sind durch die definierte Krafteinwirkung spiralförmig eingebogen und treffen mittig aufeinander. Die vormals lose in dem Kontaktteil 14 liegenden Litzen 20 des Leiters 12 sind mit dem Kontaktteil 14 kraftschlüssig verpresst. Es handelt sich also gewissermaßen um einen Presskontakt, der durch gezieltes Quetschen der Flanken 18 hergestellt wurde. Durch das innige Aneinanderlagern der Litzen 20 untereinander und mit dem Kontaktteil 14 ist auch ein guter elektrischer Kontakt zwischen allen so verpressten Elementen hergestellt.

Das rein kraftschlüssige Verpressen wird auch als Crimpen oder Bördeln bezeichnet. Die Flanken 18 können jedoch teilweise elastisch in Richtung ihrer Ausgangslage zurückfedern, so dass die kraftschlüssige Verbindung mit den Litzen 20 gelöst wird. Hierdurch kann auch ein möglicherweise gegebener elektrischer Kontakt zwischen dem Leiter 12 und dem Kontaktteil 14 verschlechtert oder sogar unterbrochen werden.

Daher sieht das erfindungsgemäße Verfahren als weiteren Schritt vor, dass wenigstens innerhalb eines unteren Totpunktzeitraums des Biegestempels 26 (Zeitpunkt (d) gemäß Fig. 1) auf den sich wenigstens teilweise zwischen dem Auflagebereich 24 des Stößels 22 und dem Biegestempel 26 angeordneten Kontaktteil 14 durch den Auflagebereich 24 hindurch dergestalt eingewirkt wird, dass wenigstens eine Komponente 20 (z.B. Litze(n), Einzelleiter) des elektrischen Leiters 12 stoffschlüssig mit dem Bodenteil 16 und/oder wenigstens einer Flanke 18 des elektrischen Kontaktteils 14 verbunden wird.

Der Totpunkt des Biegestempels 26 ist gegeben, wenn der Stößel 22 am tiefsten in die Ausnehmung 28 des Biegestempels 26 vorgedrungen ist. Dann sind die Flanken 18 maximal verformt und um die Litzen 20 herum bestmöglich geschlossen. Da im unteren Totpunkt noch Kraft auf das Kontaktteil 14 ausgeübt wird, können die Flanken 18 nicht elastisch zurückfedern. Die Litzen 20 und das elektrische Kontaktteil 14 weisen am Totpunkt bzw. während des Totpunktzeitraums des Biegestempels 26 somit die bestmögliche kraftschlüssige Verbindung auf.

Für die Einwirkung findet vorzugsweise ein Stößel oder Amboss 22 Anwendung, welcher wenigstens eine Öffnung 30 aufweist. Durch die wenigstens eine Öffnung 30 kann auf das Kontaktteil 14 dergestalt eingewirkt werden, dass wenigstens eine Komponente 20 (z.B. eine Litze eines Kabels) des elektrischen Leiters 12 stoffschlüssig mit dem Bodenteil 16 und/oder wenigstens einer Flanke 18 des Kontaktteils 14 verbunden wird. Die Öffnung 30 erlaubt z.B. einen Lichtbogen, Ultraschall oder elektrischen Strom auf das Kontaktteil 14 zu applizieren, um eine stoffschlüssige Verbindung herzustellen.

Insbesondere ist die wenigstens eine Öffnung 30 jedoch als eine Einstrahlöffnung für einen Laserstrahl 32 einer Laservorrichtung (Laserschweißgerät, Schweißlaser) 34 geeignet. Durch die Öffnung 30 wird ein einfacher Zugang zum Bodenteil 16 des elektrischen Kontaktteils 14 geschaffen, so dass unkompliziert auf das Kontaktteil 14 eingewirkt werden kann. Die Öffnung erlaubt, dass an dem Kontaktteil 14 eine stoffschlüssige Verbindung hergestellt werden kann, während es noch vom Biegestempel 26 umschlossen ist. Die Eigenschaft des Biegestempels 26, eine kraftschlüssige Verbindung herzustellen, wird dabei nicht nachteilig beeinflusst.

Gemäß einer bevorzugten Ausführungsform kann bei dem erfindungsgemäßen Verfahren ein elektrisches Kontaktteil 14 verwendet werden, das wenigstens eine Öffnung 36 in dem Bodenteil 16 aufweist. Ein Beispiel eines solchen elektrischen Kontaktteils 14 ist in Fig. 3 schematisch dargestellt.

Durch die Öffnung 36 des Kontaktteils 14 kann auf den elektrischen Leiter 14 dergestalt eingewirkt werden, dass wenigstens eine Komponente 20 des elektrischen Leiters 14 stoffschlüssig mit dem Bodenteil 16 und/oder wenigstens einer Flanke 18 verbunden wird.

Diese Ausführungsform ist insbesondere vorteilhaft bei größeren elektrischen Kontaktteilen 14 mit einer vergleichsweise großen Materialstärke (Blechdicke) zumindest im Bereich des Bodenteils 16. Ohne eine Öffnung 36 in dem Bodenteil 16 des elektrischen Kontaktteils 14 müsste eine vergleichsweise hohe Energie auf den Bodenteil 16 einwirken, bis das Material des Bodenteils 16 aufschmilzt, um mit wenigstens einer Komponente 20 des elektrischen Leiters 14 eine stoffschlüssige Verbindung eingehen zu können. Das Aufschmelzen des Materials des Bodenteils 16 würde in einem solchen Fall entweder eine hohe Energiedichte erfordern, um kurze Taktzeiten zu ermöglichen bzw. beizubehalten, oder es müsste bei einer niedrigeren Energiedichte eine verlängerte Taktzeit in Kauf genommen werden.

Durch die wenigstens eine Öffnung 36 im Bodenteil (Crimpboden) 16 des elektrischen Kontaktteils 14 kann die einwirkende Energie unmittelbar auf wenigstens eine Komponente 20 des elektrischen Leiters 14 einwirken und ein Aufschmelzen dieser wenigstens einen Komponente 20 bewirken. Das aufgeschmolzene Material der wenigstens eine Komponente 20 des elektrischen Leiters 14 kann dann eine stoffschlüssige Verbindung mit dem Bodenteil 16 und/oder wenigstens einer Flanke 18 des elektrischen Kontaktteils 14 eingehen, wofür beispielsweise lediglich ein Anschmelzen der Oberfläche des Materials des Bodenteils 16 oder der Flanke 18 erforderlich ist, was etwa durch die Temperatur der wenigstens einen Komponente 20 erreicht werden kann.

Gemäß einer weiteren vorteilhaften Ausführungsform der gerade geschilderten Variante des erfindungsgemäßen Verfahrens kann der Bereich, auf welchen die den Stoffschluss verursachenden Einwirkung einwirkt, eine größere Fläche aufweisen als die Fläche der wenigstens einen Öffnung 36 in dem Bodenteil 16.

Beispielsweise ist eine solche Öffnung 36 kleiner als der Durchmesser eines einwirkenden Schweißlaserstrahls 32, wobei die Fläche senkrecht zur Strahlrichtung des Laserstrahls 32 beim Auftreffen auf den Bereich zu messen ist.

Hierbei erfolgt die Einwirkung dann sowohl auf die wenigstens eine Komponente 20 des elektrischen Leiters 12, als auch auf den Randbereich der Öffnung 36. Hierdurch lässt sich die Zeitdauer für die Einwirkung, die den Stoffschluss verursacht, reduzieren, da ein Laserstrahl 32 nicht erst die wenigstens eine Komponente 20 des elektrischen Leiters 12 soweit aufschmelzen muss, dass ihre Wärmeeinwirkung auch bis zu dem Bodenteil 16 vordringt. Es kann dann z. B. auch mit geringeren Laserintensitäten gearbeitet werden.

Gemäß noch einer weiteren vorteilhaften Weiterbildung des erfindungsgemäßen Verfahrens erfolgt für ein Kontaktteil 14 mit einer Längs- und einer Quererstreckung das stoffschlüssige Verbinden wenigstens in einem bezüglich der Längserstreckung mittigen Teilbereich. Insbesondere handelt es sich bei dem mittigen Teilbereich um einen bezüglich der Längserstreckung der Flanken 18 des Kontaktteils 14 mittig angeordneten Bereich.

Wie in Fig. 3 schematisch dargestellt ist, lassen sich die Dimensionen des Kontaktteils 14 durch seine Längs- (angedeutet durch eine Strich-Punkt-Linie) und seine Quererstreckung charakterisieren. Und wie in Fig. 2 schematisch dargestellt, liegen in einem solchen Mittelbereich Litzen 20 eines Kabels besonders dicht zwischen den Flanken 18. Deshalb werden die auftretenden Verformungskräfte dort besonders hoch sein und die Flanken 18 bevorzugt elastisch zurückweichen.

Gleichzeitig sind die Enden der umgebogenen Flanken 18 vergleichsweise nahe dem Bodenteil 16 angeordnet. Bei einer Einwirkung dergestalt, dass ein stoffschlüssiges Verbinden wenigstens in einem bezüglich der Längserstreckung mittigen Teilbereich erfolgt, kann vergleichsweise leicht erreicht werden, dass (auch) eine stoffschlüssige Verbindung zwischen wenigstens einer Komponente 20 des elektrischen Leiters 12 und zumindest einem Bereich der Flanken 18 hergestellt wird. Eine solche (zusätzliche) stoffliche Verbindung hemmt dann das Zurückfedern der Flanken 18 an dieser Steile besonders effektiv.

In Fig. 4 ist eine schematische Seitenansicht eines elektrischen Kontaktteils 14 mit verformten Flanken 18 und kraftschlüssig verpressten Litzen 20 eines Kabels 12 angeordnet auf dem in Schnittdarstellung dargestellten Auflagebereich 24 des Stößels 22 dargestellt. Wie im in Fig. 4 dargestellten Beispiel gezeigt ist, kann mittels eines von der Laserstrahlvorrichtung 34 ausgestrahlten Laserstrahls 32, der durch die Öffnung 30 im Stößel 22 auf den Bodenteil 16 des elektrischen Kontaktteils 14 einwirkt, eine stoffschlüssige Verbindung zwischen dem Material des elektrischen Kontaktteils 14 und wenigstens einer Komponente 20 (im vorliegenden Beispiel: wenigstens einer Litze) des Kabels 12 erreicht werden. Im in Fig. 4 dargestellten Beispiel weist das elektrische Kontaktteil weiter eine Zugentlastung 38 auf, die beispielsweise ausgebildet sein kann durch zwei weitere Flanken des elektrischen Kontaktteils 14, die mittels des Biegestempels 26 fest um das Kabel 12 bzw. dessen Umhüllung 40 gebogen wurden.

Die vorliegende Erfindung betrifft auch eine Vorrichtung 10 zum Verbinden eines elektrischen Leiters 12 mit einem elektrischen Kontaktteil 14, wobei das elektrische Kontaktteil 14 einen Bodenteil 16 und damit verbundene, verformbare Flanken 18 aufweist. Die Vorrichtung weist einen Auflagebereich 24 für wenigstens einen Abschnitt des Bodenteils 16 des elektrischen Kontaktteils 14 und einen Biegestempel 26 auf, der dazu ausgebildet ist, die Flanken 18 so zu verformen, dass sie den elektrischen Leiter 12 mit dem Kontaktteil 14 kraftschlüssig verpressen. Bezüglich der genannten Merkmale der erfindungsgemäßen Vorrichtung 10 wird auf die obigen Ausführungen bezüglich der Vorrichtung 10 verwiesen, die zum Durchführen des erfindungsgemäßen Verfahrens geeignet ist.

Weiter weist die erfindungsgemäße Vorrichtung 10 wenigstens eine Laservorrichtung 34 auf, die einen Laserstrahl 32 aussenden kann, der dazu geeignet ist, Metall aufzuschmelzen. Die wenigstens eine Laservorrichtung 34 ist dazu ausgebildet, durch wenigstens eine Öffnung 30 in dem Auflagebereich 24 hindurch auf den sich wenigstens teilweise zwischen dem Auflagebereich 24 und dem Biegestempel 26 angeordneten Kontaktteil 14 dergestalt einzuwirken, dass wenigstens eine Komponente 20 des elektrischen Leiters 12 stoffschlüssig mit dem Bodenteil 16 und/oder wenigstens einer Flanke 18 verbunden wird.

Die wenigstens eine Laservorrichtung 34 kann in vorteilhafter Weise derart eingerichtet sein, dass ein Laserstrahl wenigstens innerhalb eines unteren Totpunktzeitraums des Biegestempels 26 auf den sich wenigstens teilweise zwischen dem Auflagebereich 24 und dem Biegestempel 26 angeordneten Kontaktteil 14 durch die wenigstens eine Öffnung 30 in dem Auflagebereich 24 hindurch eingewirkt.

Laserschweißen ist eine etablierte und effektive Methode, um einen stoffschlüssigen Kontakt herzustellen. Oftmals reichen bereits kurze Schweißzeiten von beispielsweise 1 bis 2 ms aus, um eine optimale Verbindung im Schweißgut zu bewirken. Eine Laserquelle lässt sich zudem sehr flexibel und variabel positionieren, da die von ihr ausgesandte Laserstrahlung z. B. über Spiegel, Prismen, Glasfasern oder andere optische Komponenten sehr einfach geführt werden kann.

Die Laservorrichtung 34 ist so angeordnet, dass der von ihr emittierte Laserstrahl 32 durch die Öffnung 30 des Stößels 22 eingestrahlt wird. Die räumliche Anordnung der Laservorrichtung 34 gegenüber dem Stößel 22 ist im Ausführungsbeispiel der Fig. 1 sowie der Fig. 3 nur sehr schematisch zu verstehen. Die Laservorrichtung 34 kann gegenüber dem Stößel 22 beliebig angeordnet sein, solange ihr Laserstrahl 32 in geeigneter Weise durch die Öffnung 30 des Stößels 22 geführt werden kann.

Dies lässt sich insbesondere auch über nicht dargestellte strahlumlenkende Elemente, wie z. B. Spiegel, Prismen oder andere optische Elemente erreichen. Auch andere Möglichkeiten der Einkopplung des Laserstrahls 32 sind denkbar. So kann der Laserstrahl 32 durch die Öffnung 30 mittels eines Lichtleiters, z.B. einer Glasfaser, geführt werden. Der Lichtleiter verläuft dann z.B. durch einen Teilbereich der Öffnung 30 oder durch die gesamte Öffnung 30. Der Stößel 22 kann auch mehrere Öffnungen aufweisen, wobei jeder der Öffnungen ein separater Laserstrahl 32 zugewiesen sein kann. Es kann auch vorgesehen sein, dass der Laserstrahl 32 sukzessive durch verschiedene Öffnungen eingestrahlt wird. Der Laserstrahl 32 kann auch durch eine Auswahl an Öffnungen unter einer Vielzahl von Öffnungen eingestrahlt werden. Insbesondere kann ein einziger Laserstrahl 32 auch über mehrere Lichtleiter aufgespalten werden, wobei die einzelnen Lichtleiter dann über die mehreren Öffnungen in den Stößel 22 hinein verlaufen.

Die Form der Öffnung(en) 30 in dem Stößel 22 ist nicht besonders beschränkt und kann beispielsweise einen kreisrunden Querschnitt, ovalen Querschnitt, eckigen Querschnitt, die Form eines Langlochs und/oder die Form eines Schlitzes aufweisen. Sind mehrere Öffnungen 30 vorhanden, kann die Form und/oder der Durchmesser jeder Öffnung 30 unterschiedlich sein. Der Durchmesser bzw. der Querschnitt der Öffnung(en) 30 kann bei der dem Auflagebereich 24 gegenüberliegenden Seite (Eintrittsstelle des Laserstrahls) größer sein als bei der Seite des Auflagebereichs 24 des Stößels 22, kann sich beispielsweise kegelförmig verjüngen. Die Größe der Öffnung(en) 30 im Bereich der Auflagefläche 24 ist nicht besonders beschränkt und kann jede geeignete Größe aufweisen, beispielsweise einen Durchmesser im Bereich von etwa 0,3 mm bis 0,8 mm.

Die Vorrichtung 10 wird auch als Applikator bezeichnet. Es kann jedoch alternativ auch vorgesehen sein, dass der Applikator, welcher dann die Kernbauteile Biegestempel 26 und Stößel 22 umfasst, räumlich von der Laservorrichtung 34 getrennt ist. Insbesondere können dann ein so ausgebildeter Applikator und die separate Laservorrichtung 34 zwei individuelle Geräte bilden, deren Kombination dann zu der Vorrichtung 10 führt.

Gemäß einer ersten vorteilhaften Weiterbildung der Vorrichtung 10 weist diese eine nicht dargestellte Steuereinrichtung auf, die dazu eingerichtet ist, den Startzeitpunkt des Ausstrahlens des/der Laserstrahls/Laserstrahlen 32, die Dauer des Ausstrahlens des/der Laserstrahls/Laserstrahlen 32, die Energiedichte des/der Laserstrahls/Laserstrahlen 32, eine Variation der Energiedichte des/der Laserstrahls/Laserstrahlen 32 während des Schweißvorgangs und/oder den Totpunktzeitraum des Biegestempels 26 zu steuern.

In den meisten Fällen wird es ausreichend sein, dass mittels der Steuereinrichtung der Startzeitpunkt und die Dauer des Ausstrahlens des/der Laserstrahls/Laserstrahlen 32 dergestalt gesteuert werden, dass der/die Laserstrahl/Laserstrahlen 32 ausschließlich während oder innerhalb eines unteren Totpunktzeitraums des Biegestempels 26 ausgestrahlt wird/werden.

Es sind jedoch auch Konstellationen denkbar, bei denen es von Vorteil ist, wenn der Startzeitpunkt der Ausstrahlung des/der Laserstrahls/Laserstrahlen 32 nicht in den Totpunktzeitraum des Biegestempels 26 fällt. So kann beispielsweise der Startzeitpunkt der Ausstrahlung des/der Laserstrahls/Laserstrahlen 32 auf einen Zeitpunkt kurz vor dem Erreichen des Totpunkts des Biegstempels 26 eingestellt werden, beispielsweise um eine Verlängerung des Totpunktzeitraums aufgrund des Erfordernisses des Aufschmelzens einer vergleichsweise großen Materialmenge zu vermeiden. Wird beispielsweise bereits kurz vor dem Totpunkt des Biegstempels 26 mit dem Ausstrahlen des/der Laserstrahls/Laserstrahlen 32 begonnen, ist am Totpunkt des Biegestempels bereits ein (erstes) Anschmelzen/Aufschmelzen von Material des elektrischen Kontaktteils 14 und/oder des elektrischen Leiters 12 erfolgt. Somit ist gegebenenfalls ein weiteres Ausstrahlen des/der Laserstrahls/Laserstrahlen 32 innerhalb des kürzest mögliche Totpunktzeitraums des Biegestempels 26 ausreichend, um eine ausreichend starke stoffschlüssige Verbindung herzustellen.

Auch kann es je nach Material und/oder Materialstärke von elektrischem Kontaktteil 14 und elektrischem Leiter 12 sowie der Energiedichte des/der Laserstrahls/Laserstrahlen 32 ausreichend sein, die Ausstrahlung des/der Laserstrahls/Laserstrahlen 32 erst zu beginnen, nachdem der Biegestempel 26 bereits seinen Totpunkt erreicht hat. Je nach den Gegebenheiten kann somit das Aussenden des/der Laserstrahls/Laserstrahlen 32 auch nur während eines Teils des Totpunktzeitraums des Biegestempels 26 ausreichend sein.

Die Energiedichte des/der Laserstrahls/Laserstrahlen 32 kann beispielsweise mittels einer Pulsmodulation des/der Laserstrahls/Laserstrahlen 32 verändert werden. Eine Möglichkeit zur Einstellung der Energiedichte ist vorteilhaft, um für die verschiedenen Materialien und/oder Materialstärken von elektrischem Kontaktteil 14 und elektrischem Leiter 12 eine möglichst optimale (taktzeitneutrale) Dauer der Einwirkung des/der Laserstrahls/Laserstrahlen 32 erreichen zu können.

Weiter sind Konstellationen denkbar, bei denen es von Vorteil ist, wenn die Steuereinrichtung dazu eingerichtet ist, während der Dauer des Ausstrahlens des/der Laserstrahls/Laserstrahlen 32 die Energiedichte von wenigstens einem Laserstrahl nach vorgebbaren Kriterien zu variieren.

Wenn beispielsweise das Material des elektrischen Kontaktteils 14 einen höheren Schmelzpunkt hat, als das Material des elektrischen Leiters 12, kann beispielsweise in einer ersten Phase des Schweißvorgangs ein Laserstrahl 32 mit einer höheren Energiedichte verwendet werden und in einer zweiten Phase des Schweißvorgangs ein Laserstrahl 32 mit einer niedrigeren Energiedichte, die für ein Anschmelzen/Aufschmelzen des Materials des elektrischen Leiters 12 ausreichend ist.

In ähnlicher Weise kann eine Variation der Energiedichte des/der Laserstrahls/Laserstrahlen 32 von Vorteil sein, wenn beispielsweise ein elektrisches Kontaktteil 14 mit einer vergleichsweise großen Materialstärke und ein vergleichsweise dünner elektrischer Leiter 12 verwendet werden.

Steht eine Laserstrahlung 32 mit einer ausreichend hohen Energiedichte nicht zur Verfügung oder ist das Ausstrahlen einer Laserstrahlung 32 ab einer vorgebbaren Energiedichte nicht erwünscht, so dass eine ausreichend starke stoffschlüssige Verbindung nicht innerhalb des kürzest möglichen Totpunktzeitraums ausgebildet werden kann, kann mittels der Steuereinrichtung in vorteilhafter Weise auch die Länge des Totpunktzeitraums des Biegestempels 26 verlängert werden.

Umgekehrt kann - im Rahmen des technisch Möglichen - mittels der Steuereinrichtung je nach den Erfordernissen auch der Totpunktzeitraum des Biegestempels 26 verkürzt werden.

Gemäß einer zweiten vorteilhaften Weiterbildung weist die Vorrichtung 10 wenigstens zwei Stößel (Ambosse) 22 auf, die nach vorgebbaren Kriterien gegeneinander austauschbar sind. Und gemäß einer dritten vorteilhaften Weiterbildung weist die Vorrichtung 10 eine Reinigungsvorrichtung zum Reinigen der Öffnung 30 und/oder des Auflagebereichs 24 auf.

Das erfindungsgemäße Verfahren und die erfindungsgemäße Vorrichtung 10 weisen den Vorteil auf, dass beispielsweise im Vergleich zu Verfahren und Vorrichtungen zur Ausbildung einer stoffschlüssigen Verbindung mittels eines Schweißverfahrens, bei dem ein Laserstrahl auf gebogene Flanken 18 eines elektrischen Kontaktteils 14 gestrahlt wird, (eine) große Öffnung(en) 30 für den Laserstrahl 32 möglich ist/sind.

Hintergrund hierfür ist, dass beispielsweise bei einem Verfahren, bei dem der Laserstrahl durch eine Öffnung im Biegestempel 26 gestrahlt wird, die Öffnung für den Laserstrahl vergleichsweise klein sein muss, damit die Eigenschaften des Biegestempels in Bezug auf die erforderliche definierte Biegung der Flanken 18 nicht nachteilig beeinflusst wird.

Wird im Bereich des Biegestempels 26 nämlich eine zu große Öffnung vorgesehen, kann dies bei dem Biegevorgang der Crimpflanken 18 (beim Einrollen) zu einer Verdrängung von Crimpflankenmaterial in das Loch im Biegestempel 26 führen ("Warzenbildung"). Dadurch kann sich das Reflexions- bzw. Absorptionsverhalten der Crimpflanken 18 ändern und damit auch die Schweißqualität. Ebenso kann bei einer zu großen Öffnung im Bereich des Biegestempels 26 beim Crimpvorgang wenigstens eine Kante der Crimpflanken 18 an einem Rand der Öffnung "hängen bleiben", wodurch anstelle eines Einrollens eine Stauchung der Crimpflanken 18 erfolgt.

Im ungünstigsten Fall kann es auch zu einem Anschweißen der Crimpflanken 18 an den Biegestempel 26 kommen. Zur Verhinderung der "Warzenbildung" besteht zwar die Möglichkeit, das Design des elektrischen Kontaktteils 14 zu ändern, was jedoch wegen dem Erfordernis der Schaffung einer zusätzlichen Kontaktvariante zu einer Erhöhung des Teilepreises führen würde. Eine Verkleinerung des Loches wiederum würde die Wahrscheinlichkeit eines Anschweißens des elektrischen Kotaktteils 14 bzw. der Flanken 18 an den Biegestempel (Crimpstempel) 26 erhöhen.

Im Gegensatz hierzu kann auf Grundlage der vorliegenden Erfindung ein vergleichsweise großer Durchmesser der Öffnung(en) 30 im Auflagebereich 24 des Stößels 22 gewählt werden bzw. vorhanden sein. Am Bodenteil 16 des elektrischen Kontaktteils 14 findet beim Crimpvorgang kein relevantes Verbiegen von Material statt und im Gegensatz zu den wenigstens zwei Flanken des elektrischen Kontaktteils 14 liegt der Bodenteil 16 des elektrischen Kontaktteils 14 stets konturgetreu auf dem Auflagebereich 24 des Stößels 22 auf. Damit kann ein großer Durchmesser der Öffnung(en) 30 gewählt werden, ohne dass sich dies nachteilig auf den eigentlichen Crimpvorgang bzw. auf die Qualität des Crimpvorgangs auswirkt.

Bei einem großen Durchmesser der Öffnung(en) 30 kann der Durchmesser des Bereichs, auf den ein Laserstrahl 32 im Bodenteil 16 des elektrischen Kontaktteils 14 einwirkt, deutlich kleiner sein als der Durchmesser der Öffnung(en) 30. Hierdurch ist die Gefahr eines Anschweißens des Bodenteils 16 mit dem Stößel 22 im Vergleich zu dem oben geschilderten Verfahren erheblich verringert.

Dennoch kann es auch bei dem erfindungsgemäßen Verfahren und der erfindungsgemäßen Vorrichtung aufgrund des Schweißverfahrens (beispielsweise durch Verdampfen oder Verspritzen) zu Ablagerung von Material im Bereich der Öffnung 30 und/oder des Auflagebereichs 24 kommen. Daher weist die Vorrichtung 10 gemäß einer vorteilhaften Weiterbildung wenigstens zwei Stößel (Ambosse) 22 auf, die nach vorgebbaren Kriterien gegeneinander austauschbar sind.

Das Austauschen kann automatisch erfolgen, beispielsweise nach einer vorgebbaren Anzahl an erfindungsgemäßen Crimpvorgängen, oder wenn mittels einer hierfür geeigneten Sensorik eine Verunreinigung des Auflagebereichs 24 und/oder eine Verunreinigung/Verkleinerung der Öffnung 30 festgestellt wird.

Für den Austausch können die wenigstens zwei Stößel 22 beispielsweise auf einer Drehplatte montiert sein, und/oder es kann eine translatorische Verschiebbarkeit der wenigstens zwei Stößel 22 vorgesehen sein.

Gemäß einer weiteren vorteilhaften Weiterbildung kann die Vorrichtung 10 eine Reinigungsvorrichtung zum Reinigen der Öffnung 30 und/oder des Auflagebereichs 24 aufweisen. Eine solche Reinigungsvorrichtung kann beispielsweise eine Spindel, einen Fräser oder eine Bürste aufweisen, mit der die Öffnung 30 und/oder der Auflagebereich 24 gereinigt werden kann. Auch kann dieser Reinigungsvorgang selbstverständlich automatisch durchgeführt werden, beispielsweise nach einem Austausch eines Stößels 22.

Das erfindungsgemäße Verfahren erlaubt eine besonders feste, sichere und dauerhafte Verbindung zwischen dem elektrischen Leiter 12 bzw. von wenigstens einer Komponente 20 des elektrischen Leiters 12 und dem elektrischen Kontaktteil 14 herzustellen. Die stoffschlüssige Verbindung wird dadurch hergestellt, dass wenigstens Material des Bodenteils 16 und Material des elektrischen Leiters 12 aufgeschmolzen wird. Wenn das aufgeschmolzene Material wieder erstarrt, führt dies zu einer besonders innigen materiellen (stoffschlüssigen) Verbindung der aufgeschmolzenen Bereiche.

Bei dem Vorgang des stoffschlüssigen Verbindens handelt es sich insbesondere um einen Schweißprozess. Bei der Quelle für den Laserstrahl 32 kann es sich um einen solchen (Schweiß)Laser handeln, der besonders intensive Laserstrahlung 32 emittiert.

Darüber hinaus kann vorgesehen sein, vormals unabhängige Flanken 18 zu einem einzigen Metallteil zu verschmelzen. Hierzu kann z. B. die Leistung oder Zeitdauer der Einwirkung angepasst werden, die den Stoffschluss bewirkt. Es kann auch eine stoffliche Verbindung zwischen den Flanken 18 des Kontaktteils 14 und den Litzen 20 eines Leitungskabels 12 hergestellt werden. Hierdurch wird ein besonders intensiver Kontakt hergestellt, und der elektrische Widerstand kann gering gehalten werden.

Das Verfahren hat den Vorteil, dass auch dünne Leitungen mit dem Kontaktteil 14 sicher verbunden werden können. Bei geringen Leitungsquerschnitten der ist ein ausschließlich kraftschlüssiges Verpressen mit dem Kontaktteil 14 meist nicht ausreichend. Die zusätzliche stoffschlüssige Verbindung erlaubt hier eine qualitative Verbesserung des elektrischen Kontakts. Ebenso lassen sich dünne Kabel mit einem vergleichsweise großen Kontaktteil 14 sicher verbinden. Folglich wird auch der Einsatz dünner Leitungen möglich, was insgesamt zur Gewichtsreduzierung der elektrischen Komponenten beiträgt. Es können auch Verbindungen zwischen solchen Kontaktteilen 14 und Leitungen hergestellt werden, bei denen nach dem Stand der Technik das Verhältnis von Leitungsquerschnitt zu Kontaktteilgröße ungünstig ist.

Wird die stoffschlüssige Verbindung von einem Laserstrahl 32 bewirkt, kann es bei dem erfindungsgemäßen Verfahren und der erfindungsgemäßen Vorrichtung auch vorgesehen sein, Größen zu messen, welche das Einwirken des Laserstrahls 32 auf das Kontaktteil 14 und/oder den Leiter 12 charakterisieren. Diese Größen liefern dann ein Maß für die Qualität der stoffschlüssigen Verbindung. Die Überwachung der Laserschweißparameter erlaubt es, auf die Qualität der hergestellten Verbindung zu schließen. Dann kann z. B. auf eine konventionelle Crimpkraftüberwachung verzichtet oder diese durch die Kontrolle der Schweißparameter ergänzt werden. Wie bereits erwähnt, versagt die Crimpkraftüberwachung häufig dann, wenn Leitungen mit geringen Querschnitten und/oder Kontaktteile 14 mit großen Blechdicken miteinander verbunden werden. Eine Überwachung der Schweißparameter erlaubt festzustellen, ob eine qualitativ hochwertige Schweißverbindung erzielt wurde. Aufwändige technische Zusatzmaßnahmen, um die Qualität der Crimpverbindung sicherzustellen, sind nicht mehr notwendig. Durch die Messung, Auswertung und Überwachung von Laserschweißparametern wird die erreichte Verbindung ausreichend qualitätsgesichert.

Bei der gemessenen Größe handelt es vorzugsweiße um eine Schweißdauer. Alternativ oder zusätzlich kann auch eine eingestrahlte Intensität des Laserstrahls 32 gemessen werden. Alternativ oder zusätzlich kann auch diejenige Wellenlänge der Strahlung mit der höchsten Strahlungsleistung, die der Bereich aussendet, auf welchen der Laserstrahl 32 einwirkt, gemessen werden. Im letztgenannten Fall kann beispielsweise eine Bestimmung der Temperatur nach dem Wien'schen Verschiebungsgesetz erfolgen, was wiederum die Qualitätskontrolle des Schweißvorgangs verbessert.

Das stoffschlüssige Verbinden erfolgt, nachdem über den Biegestempel 26 eine vorgegebene Verformung der Flanken 18 erzielt wurde. Um eine ausreichende kraftschlüssige Verpressung zu erreichen, ist es notwendig, dass die Flanken 18 durch den Biegestempel 26 angemessen verformt sind. Eine solche Verbiegung kann dann als vorgegebene Verformung festgelegt werden. Insbesondere wird die vorgegebene Verformung der maximalen Verformung entsprechen, die im jeweiligen Crimpprozess erreicht wird. Die vorgegebene Verformung kann bevorzugt auch darin bestehen, dass einander gegenüber liegende Flanken 18 so verbogen sind, dass sie miteinander überlappen und/oder sich gegenseitig berühren.

Hierdurch ist sichergestellt, dass einerseits der Kraftschluss zwischen Kontaktteil 14 und Leiter 12 optimal ist, und andererseits bestmögliche Voraussetzungen für eine effektive stoffliche Verbindung gegeben sind. Berühren sich z.B. die Flanken 18, muss gegebenenfalls nur wenig Material aufgeschmolzen werden, um eine stoffschlüssige Verbindung auch der Flanken 18 zu erreichen. Durch eine ausgeprägte Verformung kann zudem erreicht werden, dass das Flankenmaterial nur noch geringe elastische Eigenschaften aufweist. Eine Beeinträchtigung der Qualität der Crimpverbindung durch ein Auffedern der Flanken 18 wird dann vermieden.

Die erfindungsgemäße Vorrichtung kann weiter eine Messeinrichtung aufweisen, welche dazu ausgelegt ist, Größen zu messen, die den Schweißlaserstrahl 32 charakterisieren. Über eine solche Messeinrichtung ist dann eine Qualitätssicherung des Schweißprozesses und der mit ihm erzielten stofflichen Verbindung sichergestellt.

Die erfindungsgemäße Vorrichtung kann weiter auch eine Positioniereinrichtung aufweisen, welche in der Lage ist, das Laserschweißgerät 34 und/oder das Kontaktteil 14 in geeigneter Art und Weise zu positionieren. Insbesondere lässt sich die relative Anordnung von Laserschweißgerät 34 und Kontaktteil 14 zueinander einrichten. Wenn der Bodenteil 16 des Kontaktteils 14 wenigstens eine Öffnung 36 aufweist, so lässt sich die Lage des Kontaktteils 14 über die Positioniereinrichtung so einstellen, dass wenigstens eine Öffnung 36 im Schweißlaserstrahl 32 zu liegen kommt. Die Positioniereinrichtung erlaubt also, mit dem Laserstrahl 32 quasi auf die Öffnung 36 zu zielen. So kann über den Laserstrahl 32 direkt auf den Leiter 12 eingewirkt werden und es können z.B. dessen Litzen 20 aufgeschmolzen werden.

Der Vorgang des Crimpens, d. h. des Verbiegens der Flanken 18, läuft über eine gewisse Zeitdauer ab: Ein bereits vercrimptes Kontaktteil 14 wird aus der Vorrichtung 10 entnommen und wiederum neu zu verbindende Elemente werden eingeführt. Die Zeitdauer für einen Zyklus des Crimpprozesses wird auch von der Zeitspanne beeinflusst, die benötigt wird, um Leiter 12 und Kontaktteil 14 miteinander zu verpressen. Der Vorgang des Laserschweißens erhöht die Zykluszeit des Crimpprozesses dabei nicht oder nur unwesentlich. Das kombinierte Crimp-/Schweißverfahren ist damit gegenüber dem reinen Crimpverfahren taktzeitneutral. Da pro Minute beispielsweise etwa mehrere 10 bis 100 Crimpverbindungen hergestellt werden können, ist dies ein erheblicher Vorteil. Obwohl die Crimpverbindung durch das zusätzliche Schweißen verbessert wird, wird die benötigte Zeitdauer für das gesamte Verfahren nicht oder nur unwesentlich verlängert.

Die Qualitätssicherung des kombinierten Crimp- und Schweißverfahrens erfolgt beispielsweise durch die Überwachung der Laserschweißparameter nach dem Stand der Technik. Die Qualität der kraftschlüssig hergestellten Crimpverbindung wird üblicherweise dadurch sichergestellt, dass die während des Verformens auftretenden Kräfte überwacht werden. Eine solche Crimpkraftüberwachung kann durch die zusätzliche Überwachung der Laserschweißparameter ergänzt werden. Dieser zusätzliche qualitätssichernde Schritt garantiert dann, dass tatsächlich eine ausreichende Verbindung zwischen Kontaktteil 14 und Leiter 12 hergestellt ist. Eine ausschließliche Crimpkraftüberwachung wäre unter bestimmten Bedingungen (z. B. ungünstige Größenverhältnisse von Leiter 12 und Kontaktteil 14) hierzu nicht in der Lage.

Ein Crimpprozess unter integriertem Verschweißen der Crimpkontakte (Flanken) von oben durch den Biegestempel (Crimpstempel) mittels Laser ist insoweit nachteilig, als es mit einem erhöhten Aufwand für eine exakte Positionierung des elektrischen Kontaktteils unter dem Biegestempel (Crimpstempel) verbunden ist, um so die Reflexions- bzw. Absorptionseigenschaften der Crimpflanken konstant und reproduzierbar zu halten.

Durch eine Verdrängung von Crimpflankenmaterial beim Einrollen der Flanken in das Loch im Crimpstempel kann es zu einer "Warzenbildung" kommen. Dadurch kann sich das Reflexions- bzw. Absorptionsverhalten der Crimpflanken ändern und damit die Schweißqualität. Im ungünstigsten Fall kann es auch zu einem Anschweißen der Crimpflanken an den Crimpstempel kommen. Eine "Warzenbildung" kann zwar durch eine Änderung des Designs des elektrischen Kontaktteils verhindert werden, dies ist allerdings wegen der Schaffung einer zusätzlichen Kontaktvariante mit einer Erhöhung des Teilepreises verbunden.

Und eine Verkleinerung des Lochs im Crimpstempel wiederum würde zum Anschweißen des Kontaktteils an den Crimpstempel (Biegestempel) führen.

Erfindungsgemäß erfolgt eine Crimpschweißung von unten durch den Amboss bzw. Stößel 22. Durch eine entsprechende Schweißtiefe gelingt es auch, mit einem Schweißprozess von unten die Crimpflanken 18 samt Leitung(en) 20 miteinander zu verschweißen.

Die Positionierung des elektrischen Kontaktteils 14 ist unproblematisch. Es kann eine größere Öffnung 30 im Amboss bzw. Stößel 22 verwendet werden, wodurch ein Anschweißen des elektrischen Kontaktteils 14 verhindert und das Qualitätsfenster vergrößert wird. Und es können weiterhin Standardkontakte 14 verwendet werden.

## Patentansprüche

1. Verfahren zum Verbinden eines elektrischen Leiters (12) mit einem elektrischen Kontaktteil (14), das einen Bodenteil (16) und damit verbundene, verformbare Flanken (18) aufweist, wobei die Flanken (18) mittels einer Vorrichtung, die einen Biegestempel (26) sowie einen Auflagebereich (24) für wenigstens einen Abschnitt des Bodenteils (16) des elektrischen Kontaktteils (14) aufweist, mittels des Biegestempels (26) so verformt werden, dass sie den elektrischen Leiter (12) mit dem Kontaktteil (14) kraftschlüssig verpressen, wobei
wenigstens innerhalb eines unteren Totpunktzeitraums des Biegestempels (26) auf den sich wenigstens teilweise zwischen dem Auflagebereich (24) und dem Biegestempel (26) angeordneten Kontaktteil (14) durch den Auflagebereich (24) hindurch dergestalt eingewirkt wird, dass wenigstens eine Komponente (20) des elektrischen Leiters (12) stoffschlüssig mit dem Bodenteil (16) und/oder wenigstens einer Flanke (18) verbunden wird,
**dadurch gekennzeichnet, dass**
die Einwirkung, welche die stoffschlüssige Verbindung bewirkt, über wenigstens eine Öffnung (30) in dem Auflagebereich (24) erfolgt, und dass
wenigstens ein durch die wenigstens eine Öffnung (30) in dem Auflagebereich (24) hindurchtretender Laserstrahl (32) die stoffschlüssige Verbindung bewirkt.

2. Verfahren nach einem der vorhergehenden Ansprüche,
**dadurch gekennzeichnet, dass**
durch wenigstens eine Öffnung (36) in dem Bodenteil (16) des Kontaktteils (14) auf den elektrischen Leiter (12) dergestalt eingewirkt wird, dass wenigstens eine Komponente (20) des elektrischen Leiters (12) stoffschlüssig mit dem Bodenteil (16) und/oder wenigstens einer Flanke (18) verbunden wird.

3. Verfahren nach Anspruch 2,
**dadurch gekennzeichnet, dass**
der Bereich, auf welchen der Laserstrahl (32) einwirkt, eine größere Fläche als die Fläche der wenigstens einen Öffnung (36) in dem Bodenteil (16) aufweist, wobei die Fläche senkrecht zur Strahlrichtung des Laserstrahls (32) beim Auftreffen auf den Bereich zu messen ist.

4. Verfahren nach einem der vorhergehenden Ansprüche,
**dadurch gekennzeichnet, dass**
für ein Kontaktteil (14) mit einer Längs- und einer Quererstreckung das stoffschlüssige Verbinden wenigstens in einem bezüglich der Längserstreckung mittigen Teilbereich erfolgt.

## Claims

1. Method for connecting an electrical conductor (12) to an electrical contact part (14) which has a bottom section (16) and deformable side members (18) connected thereto, the side members (18), by means of a device which has a bending die (26) and a supporting region (24) for at least a portion of the bottom section (16) of the electrical contact part (14), being so deformed by means of the bending die (26) that they press the electrical conductor (12) into a connection to the contact part (14) which is held by friction, action being taken on the contact part (14), at least part of which is arranged between the supporting region (24) and the bending die (26), within a period in which the bending die (26) is in a maximum lowered position and through the supporting region (24), in such a way that at least one component (20) of the electrical conductor (12) is connected by fusion to the bottom section (16) and/or to at least one side member (18), **characterised in that** the action which makes the connection by fusion takes place through at least one opening (30) in the supporting region (24), and **in that** at least one laser beam (32) which passes through the at least one opening (30) in the supporting region (24) makes the connection by fusion.

2. Method according to one of the preceding claims, **characterised in that** action is taken on the electrical conductor (12), through at least opening (36) in the bottom section (16) of the contact part (14), in such a way that at least one component (20) of the electrical conductor (12) is connected by fusion to the bottom section (16) and/or to at least one side member (18).

3. Method according to claim 2, **characterised in that** the area of the region on which the laser beam (32) acts is larger than the area of the at least one opening (36) in the bottom section (16), the area having to be measured perpendicularly to the direction of the laser beam (32) when it impinges on the region.

4. Method according to one of the preceding claims, **characterised in that**, for a contact part (14) which is of a longitudinal and a transverse extent, the connection by fusion takes place at least in a sub-region which is central to the longitudinal extent.

## Revendications

1. Procédé de raccordement d'un conducteur électrique (12) à un élément de contact électrique (14), qui présente une partie de fond (16) et des flancs (18) déformables qui y sont raccordés, dans lequel les flancs (18) sont déformés au moyen d'un dispositif, qui présente un poinçon de cintrage (26) ainsi qu'une zone d'appui (24) pour au moins une section de la partie de fond (16) de l'élément de contact électrique (14), au moyen du poinçon de cintrage (26) de telle sorte qu'ils compriment le conducteur électrique (12) avec l'élément de contact (14) par force, dans lequel
une action est exercée au moins à l'intérieur d'une période de temps mort inférieure du poinçon de cintrage (26) sur l'élément de contact (14) agencé au moins en partie entre la zone d'appui (24) et le poinçon de cintrage (26) à travers la zone d'appui (24) de telle sorte qu'au moins un composant (20) du conducteur électrique (12) est raccordé par correspondance de matière à la partie de fond (16) et/ou au moins à un flanc (18),
**caractérisé en ce que**
l'action, qui entraîne le raccordement par correspondance de matière, a lieu via au moins une ouverture (30) dans la zone d'appui (24), et que
au moins un rayon laser (32) passant à travers l'au moins une ouverture (30) dans la zone d'appui (24) entraîne le raccordement par correspondance de matière.

2. Procédé selon l'une quelconque des revendications précédentes,
**caractérisé en ce que**
une action est exercée sur le conducteur électrique (12) par au moins une ouverture (36) dans la partie de fond (16) de l'élément de contact (14) de telle sorte qu'au moins un composant (20) du conducteur électrique (12) est raccordé par correspondance de matière à la partie de sol (16) et/ou à au moins un flanc (18).

3. Procédé selon la revendication 2,
**caractérisé en ce que**
la zone, sur laquelle le rayon laser (32) agit, présente une plus grande surface que la surface de l'au moins une ouverture (36) dans la partie de fond (16), dans lequel la surface doit être mesurée perpendiculairement à la direction de rayonnement du rayon laser (32) lors de l'impact sur la zone.

4. Procédé selon l'une quelconque des revendications précédentes,
**caractérisé en ce que**
pour un élément de contact (14) avec une extension longitudinale et une extension transversale, le raccordement par correspondance de matière a lieu au moins dans une zone partielle médiane par rapport à l'extension longitudinale.
